# EUROPÄISCHE PATENTANMELDUNG

(11) **EP 1 133 915 A1**
(43) Veröffentlichungstag der Anmeldung: **19.09.2001**
(21) Anmeldenummer: 00105428.7
(22) Anmeldetag: 15.03.2000
(51) Int. Cl.: A01F 29/00

(54) **Verfahren und Vorrichtung zur vollkontinuierlichen Häckselung von Strohballen und staubfreien Ablegung des gehäckselten Guts.**

(71) Anmelder: Schmidmeier, Thomas, D-93197 Ödenthal (DE)
(72) Erfinder: Schmidmeier, Thomas, D-93197 Ödenthal (DE)

(57) **Zusammenfassung**

Die Erfindung betrifft ein Verfahren und eine zur Durchführung des Verfahrens geeignete Vorrichtung zur vollkontinuierlichen Häckselung von gelagerten Ballen aus Halmgut wie Mais, Weizen, Roggen, Hafer, Gras bzw. Heu usw.

Gemäß der Erfindung wird in einem einzigen Arbeitsgang das Aufreissen, Abrollen, Häckseln und Auswerfen des gehäckselten Guts vorgenommen, wobei der Auswurf gezielt sowohl flächig als auch in Reihe vorgenommen werden kann und dies in variablem Abstand von der Vorrichtung.

Die zu vorstehendem Verfahren geeignete Vorrichtung gemäß der Erfindung ist bevorzugt als Fahrzeug ausgebildet, wobei der Betrieb sowohl des Fahrzeugs als auch der verschiedenen Verfahrensstufen zentral von der Fahrerkabine gesteuert werden können.

## Beschreibung

Die Erfindung betrifft ein vollkontinuierliches Verfahren zum Häckseln von Strohballen, wie sie beim Ernten von Halmgut, insbesondere Mais, Weizen, Roggen, Hafer aber auch Gras bzw. Heu usw. auf vorwiegend großflächigen Anbaugebieten anfallen.

Es ist bekannt, die nach der Ernte der Fruchtstöcke noch stehenden Stengel bzw. Halme entweder direkt, d.h. nach dem vorwiegend kontinuierlichen Abtrennen der Ähren usw. bzw. im Anschluß an die Gewinnung des Kornmaterials, noch auf dem Feld durch sogenannte Feldhäcksler am Boden abzuschneiden und zu zerkleinern, wobei ein sogenanntes Häckselgut von vielfach wenigen Zentimetern oder auch Millimetern Länge erhalten wird. Auch ist es bereits bekannt, das am Boden abgeschnittene Halmgut nachträglich zu zerkleinern (häckseln) und z.B. als Spreu auf dem abgeernteten Feld wieder auszubreiten.

Vielfach verwendet hierzu werden sogenannte Erntebergungsvorrichtungen bzw. sogenannte Häckselmaschinen bzw. Feldhäcksler, bei denen das noch stehende Halmgut am Boden abgeschnitten und durch ein oder mehrere Förderelemente einem Häckselrotor zugeführt wird. An oder in einem derartigen Rotor erfolgt der Schnitt des noch langstängeligen Halmguts, evtl. auch Gras usw., in das zerkleinerte Häckselgut, welches anschließend über hierzu geeignete mechanische Elemente ausgeworfen und entweder gesammelt oder über dem Feldboden versprüht wird.

Derartige, insbesondere kontinuierlich arbeitende Anlagen bzw. Aggregate sind seit langem bekannt und dienen heute als allgemein verwendbares Rüstzeug der modernen Landwirtschaft. Diese Aggregate werden insbesondere als sogenannte Feldhäcksler oder auch als während oder nach dem Dreschvorgang als Anbauhäcksler für Mähdrescher eingesetzt. Hingewiesen sei u.a. auf die DE 41 05 017, die DE 43 21 905 oder die DE 29 22 982.

In jüngster Zeit ist man vielfach dazu übergegangen -und dies gilt insbesondere für großflächige Anbaugebiete- das Halmgut als sogenannte Ballen zu sammeln, die später -je nach Bedarf und zeitunabhängig- zerkleinert bzw. gehäckselt werden.

Derartige Ballen, insbesondere Strohballen, aber auch Gras- bzw. Heuballen, in vorwiegend zylindrischer Form mit Durchmessern von bis zu 180 cm und mehr sowie einer zylindrischen Höhe bzw. Länge von vielfach über 200 cm, haben den Vorteil, daß sie auf dem abgeernteten Feld gelagert und je nach Bedarf oder Notwendigkeit dem Häckselprozess zugeführt werden können.
Hierzu wurden sogenannte Rundballenhäcksler entwickelt, die als fahrbare Aggregate je nach Ort und Zeit variabel eingesetzt und dem zu häckselnden Rundballenmaterial angepasst werden können.

Diese Rundballenhäcksler liefern -unabhängig von der Konsistenz des jeweiligen Halmguts- ein Häckselprodukt variabler, bzw. definierter Länge, und dies sowohl beim Einsatz von relativ weichem bis hin zu extrem hartgepresstem und staubtrocknem, als Ballen vorliegendem Stroh- bzw. Halmmaterial aus Getreide, Gras, Heu usw. (vgl. z.B. PCT-Anmeldung WO 86/03094 oder PCT-Anmeldung WO 93/17548).

Nachteilig bei Häckselaggregaten für insbesondere, jedoch nicht ausschlieslich, Strohballen erwies sich bisher die Tatsache, daß sie zwar in der Lage sind, in Form von Ballen vorliegendes Material örtlich variabel und materialbezogen, d.h. in mehr oder weniger beliebigen Häckselgrößen zu behandeln -was insbesondere für feststehende, nicht fahrbare Anlagen gilt- daß sie aber hierzu einen hohen Aufwand manueller Arbeit erfordern, um die einzelnen Stufen des Verfahrens, nämlich insbesondere das Aufreissen der Ballen, das Abtrennen der die Ballen zusammenhaltenden Bindemittel, die Weiterleitung des aufgelockerten Guts zur eigentlichen Häckselmaschine, ein umweltfreundliches, gesteuertes bzw. örtlich variables Ablegen oder Abstreuen des gehäckselten Guts in variablem Abstand vom Häckselaggregat usw. durchzuführen.

Insbesondere die staubfreie, kontinuierliche und gezielte Weiterverarbeitung des gehäckselten Guts, d.h. z.B. die Abstreuung bzw. Ablegung in variablem Abstand von der Häckselanlage etwa auf schmale Reihenkulturen am Ort oder auch großflächig auf vorbereitete Ackerböden (zwecks späterer Einpflügung usw.) oder schließlich das Auffangen als Haufenmaterial für spätere Verwendung z.B. das Abfüllen in Säcke oder dergleichen Behälter erfordert vielfach einen erheblichen manuellen Arbeitsaufwand zur Steuerung der einzelnen Verfahrensstufen, wobei die Bedienung der Vorbereitungs- und Häckselaggregate (Heranbringen der Ballen, Aufreissen der Ballen, Häckselvorgang, Ausbringung des gehäckselten Guts usw.) zusätzlich einen erheblichen manuellen Aufwand erfordern.

Dabei kommt es vielfach auch zu Arbeitsunterbrechungen durch Ausfall einzelner Arbeitsstufen, wodurch der Gesamtvorgang erheblich gestört ist.

Gegenstand vorliegender Erfindung ist daher ein Verfahren sowie eine zur Durchführung des Verfahrens geeignete Vorrichtung bzw. Anlage zum Häckseln von als Ballen vorliegendem pflanzlichem Gut, insbesondere Strohballen, aber auch Gras- oder Heuballen usw. beliebiger Konvenienz. Das Verfahren ist dadurch gekennzeichnet, daß in einem einzigen, vollkontinuierlichen Vorgang bzw. Arbeitsablauf die zu häckselnden Materialien zunächst -wenn erforderlich- von einer umhüllenden Plastikfolie befreit, von dem sie bindenden bzw. zusammenhaltendem Material (Bindfäden; Kunststoffbänder; feinstes Drahtmaterial usw.) getrennt, das Bindematerial abgezogen, die gelösten Ballen als sogenannte Rollenmatten über Förderelemente wie beispielsweise Kratzböden dem Häckselrotor zugeführt, hier als Funktion vom chemisch-/physikalischen Materialeigenschaften zerkleinert, und über eine steuer- und regulierbare Auswurfvorrichtung, insbes. einem teleskopartigen Ausleger, in variabler Auswurfbreite und Entfernung von der eigentlichen Häckselanlage ausgetragen bzw. versprüht wird.

Diese Wirkungsweise der einen Gesamtkomplex bildenden Vorrichtung und das mit der Vorrichtung durchführbare Verfahren hat den erheblichen Vorteil, daß von einer einzigen, insbesondere beweglichen bzw. fahrbaren Steueranlage alle Elemente zur Häckselung von Ballen je nach Erfordernis eingesetzt und dirigiert werden können und das erzeugte Häckselgut bei variablem Schnitt bzw. Schnittlänge entsprechend der gegebenen Aufgabe z.B. in Silos abgelegt oder auf dem Feld versprüht und ggf. auch zur Aufbewahrung verpackt werden kann.
In einer weiteren Ausbildung des erfindungsgemäßen Verfahrens kann dem erzeugten Häckselgut beim Austrag aus der Anlage oder auch schon kurz nach dem Verlassen des Häckslers selbt ein verklebendes Konzentrat zugesetzt werden, sodaß jegliche Staubbildung im Auswurfsbereich des Häckselguts verhindert und ein insgesamt landwirtschaftlich ökologisches System geschaffen wird.

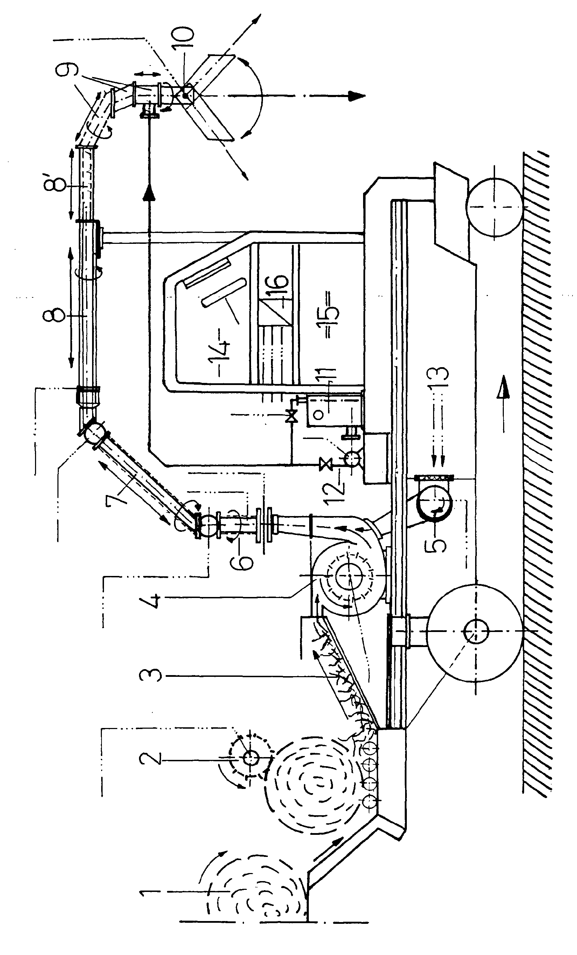

Mit Bezugnahme auf die einzige Figur wird zunächst der grundsätzliche Aufbau der Gesamtvorrichtung und des mit dieser Vorrichtung durchgeführten Verfahrens zum Häckseln von Strohballen (auch Gras-, Heu- oder sonstiges Halmmaterial) und der Abnahme bzw. evtl Weiterverwendung des Häckselguts beschrieben.

Die z.B. durch einen Gabelstabler oder ein entsprechendes Transport- bzw. Hebe-Werkzeug herangebrachten Strohballen (1) gelangen zunächst in eine Bandabrollvorrichtung (2), wo die Ballen durch Schnitt des bindenden Materials von diesem befreit und als Matten abgelegt bzw. ausgebreitet werden. Anschließend übernimmt eine Fördereinrichtung (3) das in dünner Schicht ausgebreitete Ballenstroh (auch Gras, Heu usw.) und transportiert es zur eigentlichen Häckselmaschine (4). Als geeignete Förderanlagen bzw. -einrichtungen (3) können selbstverständlich beliebige, insbes. kontinuierlich arbeitende Elemente eingesetzt werden, wobei sich Rollenförderer oder sogenannte Kratzböden besonders bewährt haben.

Die mit Position (4) bezeichnete eigentliche Häckselmaschine kann z.B. ein Scheibenradhäcksler oder ein mit zwei gegenläufig arbeitenden Kreismessern mit evtl. zugeordneter Zinkenschar sein, jedoch ist die Art des eigentlichen Häckselaggregats nicht Aufgabe bzw. Gegenstand vorliegender Erfindung.

Das im Häcksler (4) erzeugte, in seiner Länge beliebig variable Gut wird über ein Gebläse (5) durch Druckluft (Eingang 13) in die Auswurfanlage (6)-(10) gefördert und aus dieser beliebig, d.h. flächig gestreut oder als Haufwerk bei variabler Entfernung von der Häckselvorrichtung abgelegt bzw. ausgesprüht.
Es hat sich beim Betrieb von Häckselanlagen gezeigt, daß vor allem bei länger gelagertem Gut, insbesondere jedoch von Ballengut, eine erhebliche, ausserordentlich gesundheitsschädigende Staubbildung nicht nur im Bereich des eigentlichen Häckslers selbst, sondern auch -und dies ganz besonders- im Bereich des Auswurfs des gehäckselten Materials auftritt. Um diese Staubbildung zu vermeiden bzw. auf ein Mindestmaß zu reduzieren, gehört zur Vorrichtung gemäß der Erfindung eine Klebstoffeinsprühanlage, die aus einem Behälter (11) bei kontinuierlichem Umlauf über eine Dreiwegpumpe (12) eine verdünnte Lösung eines vorwiegend organischen Klebstoffs in den Austragungsarm (10) des gehäckselten Materials eindosiert, sodaß der Materialaustritt bei (10) völlig oder zumindest in hohem Maße staubfrei erfolgt. Natürlich ist die Konzentration der Klebstofflösung sowie ihre Menge so eingestellt, daß es zu keinerlei Verbacken des austretenden Häckselguts bei (10) kommt.

Eine derartige Maßnahme ist von besonderer Bedeutung für den Häckselprozess von Stroh- bzw. Halmgut-Ballen, da gerade bei längerem Lagern der vorwiegend in Folien verpackten Ballen eine erhebliche Staubbildung durch Materialabbau zu beobachten ist.

Als besonders geeignete Klebstoffe haben sich im praktischen Betrieb solche auf Zellulosebasis erwiesen, da diese keinerlei negative Einwirkungen auf das gehäckselte Gut ausüben und Klumpenbildung des gehäckselten Guts vermieden wird. Von besonderer Bedeutung für die Wirkungs- und Arbeitsweise des Verfahrens bzw. der Anlage ist ein sogenannter Austrags-Schwenkarm (6) - (9), der hydraulisch und teleskopförmig sowohl auf und ab als auch seitlich beweglich ist und -bedingt durch die teleskopartige Ausführung und Arbeitsweise- auch bezüglich Reichweite praktisch beliebig eingestellt werden kann.
Über das drehbare Rohrsystem (6) ist der Schwenkarm insgesamt um 360° in der Ebene schwenk- bzw. drehbar, sodaß alle Bereiche rund um die Gesamtanlage für den Auswurf des gehäckselten Guts erfassbar sind.

Der Schwenkarm weist eine teleskopartig verlängerbare Fortsetzung (8,8') auf, die beliebig verlängerbar (ausziehbar) ist und ebenfalls um die eigene Achse gedreht werden kann.

Die Verbindung der einzelnen Elemente (6,7,8,8') erfolgt z.B. durch drehbare winkelelemente (nicht beansprucht), wodurch ein horizontal und vertikal insgesamt stufenlos arbeitendes Auswurf-Rohrsystem gegeben ist.

Über geeignete Drehventile führt die insbesondere vertikal angeordnete Leitung bzw. Rohr (6) in das Zwischenstück (7) weiter, das die Verbindung zum vorwiegend waagerecht gelagerten Mittelstück (8) des Austrags-Schwenkarm herstellt. Dieses Mittelstück bzw. Rohr (8) nimmt die teleskopartige Weiterleitung (8') auf. Damit wird die gewünschte Abstandsveränderung (Verlängerung oder Verkürzung) der Austragsorgane stufenlos eingestellt bzw. variierbar.

Die Austragsorgane bestehen bevorzugt aus einem oder auch mehreren drehbaren Winkelrohren (9), über die die Auswurfhöhe des Häckselguts (Abstand zum Boden, zur Ablagefläche oder Streubereich) ggf. in Verbindung mit dem in seiner Stellung veränderbaren Zwischenstück (7) variiert werden kann. Die Rohrstücke (9) bilden somit das Ende der teleskopförmig verlängerbaren Leitung (8'). Sie leiten weiter zu einem Verteiler für das Häckselgut (nicht dargestellt) oder direkt in ein ggf. rotierrendes Endstück (10) mit Sprühdüsen oder Rohrenden, sodaß das Häckselgut flächig (über die genannten Sprühdüsen) oder auch als Strahl ausgebracht werden kann. Für den zuletzt genannten Fall kann ggf. eine verstellbare Klappe vorhanden sein, um die in der Zeiteinheit auszutragende Menge an Häckselgut variieren zu können.

In diesem Zusammenhang sei darauf hingewiesen, daß zum Zweck des Austrags des Häckselguts auch andere, hier nicht näher beschriebene Elemente des gezielten bzw. flächenartigen Produktauswurfs eingesetzt werden können.

Die Gesamtanlage ist bevorzugt auf einem ortsunabhängigen Fahrzeug (Fahrtrichtung gemäß Pfeil über der Bodenfläche gemäß einziger Figur) installiert. Sowohl der Fahrzeugbetrieb als auch die Steuerung bzw. Ein- oder Ausschaltung der einzelnen Betriebselemente, d.s. Fahrzeuggeschwindigkeit und -richtung, Heranbringen der zu häckselnden Ballen (1), Abziehen von Bindemitteln bzw. der die Ballen einschließenden Folien (2) und Aufrollen der Ballen, Förderung des mattenartig ausgebreiteten Materials (3), Betrieb der eigentlichen Häckselmaschine (4), des Gebläses(5) und Einstellung des Austrags-Schwenkarms (6 - 9) auf die gezielte Ablage des Häckselguts und schließlich der Betrieb für die Klebstoff-Umwälzpumpe (12)sind insgesamt von einer Steueranlage (16) im Fahrerhaus (14,15) steuer- bzw. schaltbar.

Damit ist ein ortsunabhängiges System gegeben, das nicht nur für das Bedienungspersonal -im allgemeinen nur eine Person in der Kabine (14) als Fahrer der Anlage und zur Steuerung der einzelnen Betriebselemente über die Steueranlage (16)-keinerlei gesundheitsschädigende Einflüsse ausübt, sondern praktisch auch einen vollautomatischen und vollkontinuierchen Betrieb liefert.

So kann beispielsweise durch geeignete optische oder elektronische Signalgeber am Eingang der Ballen (1) der Steueranlage (16) im Fahrerhaus (14,15) der Beginn oder auch Abbruch des des Häckselvorgangs (2,3,4,12) mitgeteilt werden, oder es können auch einzelne Verfahrensstufen, z.B. bei Überlastung individuell je nach mengenmäßiger Anlieferung von Ballenmaterial ein- oder ausgeschaltet werden.

Damit führt die Erfindung zu einem insgesamt vollkontinuierlichen oder -je nach Bedarf- auch chargenmäßigen Prozess, der die vielen Probleme der Aufbereitung von zu häckselndem Gut, insbesondere Halmgut, d.h. speziell Halmgutballen auf einfachste und verfahrenstechnisch sicherer Weise überwindet bzw. löst, und dies in einem umweltfreundlichen und materialspezifischen Vorgang.

Dazu kommt, daß die einzelnen Stufen des Verfahrens je nach Menge bzw. Anzahl der angelieferten Ballen variiert werden können, so'daß keine Stauungen über die Gesamtanlage bzw. den Gesamtprozess, d.h. vom Eingang (1) der Ballen bis hin zum Austrag (10) des gehäckselten Materials entstehen und eine beliebig variable Austragsmöglichkeit dieses Häckselguts, d.h. flächig bis großflächig oder auch als Haufen oder Reihen bis hin zur sofortigen Abfüllung in Säcke oder Containern gegeben ist.

## Patentansprüche

1. Verfahren zur insbesondere vollkontinuierlichen Häckselung von Strohballen und sonstigem halmförmigem landwirtschaftlichem Gut in Ballenform und anschliessendem gezielten Auswurf des gehäckselten Materials in einem einzigen vollkontinuierlichen Prozess,
**dadurch gekennzeichnet,**
**daß** die Ballen von dieselben bindendem Material befreit, zu flachem mattenförmigem Material ausgerichtet, gehäckselt und anschließend über steuer- und regulierbare Ausuurfvorrichtungen in variabler Auswurfbreite und Abstand ausgetragen bzw. versprüht werden.

2. Verfahren nach Anspruch 1,
**dadurch gekennzeichnet, daß** das gehäckselte Material vor oder in der Auswurfvorrichtung mit einer verdünnten Lösung eines insbes. organischen Klebstoffs versetzt wird.

3. Verfahren nach Anspruch 1,
**dadurch gekennzeichnet, daß** alle Einzelstufen des Verfahrens von einer gemeinsamen Regel- und/oder Steueranlage bzw. Logistik einstell- und steuerbar sind.

4. Vorrichtung zur Durchführung des Verfahrens nach den Ansprüchen 1-3,
**gekennzeichnet durch** eine Bandabrollvorrichtung (2),
eine Fördereinrichtung (3), einer an sich bekannten Häckselvorrichtung (4), einem Gebläse (5) sowie einem Austrags-Schwenkarm (6) - (9), wobei alle Einzelelemente der vorstehenden Definition als solche oder im Verbund regel- und steuerbar sind.

5. Vorrichtung nach Anspruch 4,
**dadurch gekennzeichnet, daß** der Austrags-Schwenkarm (6)-(9) aus einem drehbaren, insbes. vertikal ausgerichtetem Rohr (6), einem Zwischenstück (7), einem insbesondere wagerecht gelagerten Mittelstück (8), einem teleskopartig aus dem Mittelstück (8) aus- und einziehbaren Ausleger (8') sowie aus drehbaren, endständigen Winkelrohren (9) besteht.

6. Vorrichtung nach Anspruch 5,
**dadurch gekennzeichnet daß** das oder die Winkelrohre (9) in ein ggf. rotierendes Endstück (10) einmünden, das mit Sprühdüsen oder auch einfachen Rohrstücken ausgerüstet ist.

7. Vorrichtung nach einem der Ansprüche 1-6,
**dadurch gekennzeichnet, daß** alle Verfahrensstufen von einer zentralen Leit- und Steuereinrichtung (16) im Fahrerhaus (15,14) der insgesamt fahrbaren Anlage regel- und steuerbar sind.

8. Vorrichtung des Verfahrens nach Anspruch 1,
**gekennzeichnet durch** einen Behälter (11) mit Dreiwegpumpe (12) zur Eindüsung der verdünnten Klebstofflösung in die Austrittsorgane (9) des Austrags-Schuenkarms.
